# EUROPEAN PATENT SPECIFICATION

(11) **EP 3 738 998 B1**
(45) Date of publication and mention of the grant of the patent: **21.08.2024**
(21) Application number: 20170230.5
(22) Date of filing: 17.04.2020
(51) Int. Cl.: C08L 7/00, B60C 1/00, C08K 3/04, C08L 9/00, C08L 9/06, B60C 11/00

(54) **TREAD RUBBER COMPOSITION AND TIRE**
LAUFFLÄCHENKAUTSCHUKZUSAMMENSETZUNG UND REIFEN
COMPOSITION DE BANDE DE ROULEMENT EN CAOUTCHOUC ET PNEUMATIQUE

(30) Priority: 17.05.2019 JP 2019093743
(43) Date of publication of application: 18.11.2020
(60) Divisional application: 24186066.7
(73) Proprietor: Sumitomo Rubber Industries, Ltd., Kobe-shi, Hyogo-ken 651-0072 (JP)
(72) Inventor: HIMEDA, Shingo, Kobe-shi, Hyogo 651-0072 (JP)
(74) Representative: Manitz Finsterwald Patent- und Rechtsanwaltspartnerschaft mbB

(56) References cited:
- EP-A1- 2 444 257
- EP-A1- 2 995 644
- EP-A1- 3 546 512
- EP-A1- 3 632 702
- WO-A1-94/19412
- JP-A- 2018 150 420
- US-A1- 2018 134 079
- KGK: "Carbon black and silica loaded rubbers . WLF equation . Vertical shifting . Filler network . Network agglomeration energy . Payne Effect Interpretation of Filler Networking of Loaded Rubbers via Mastercurves", 31 January 2010 (2010-01-31), XP055716559, Retrieved from the Internet <URL:https://www.kgk-rubberpoint.de/wp-content/uploads/migrated/paid_content/artikel/1013.pdf> [retrieved on 20200720]

## Description

### BACKGROUND OF THE INVENTION

### Field of the Invention

The present invention relates to a tread rubber composition and a tire.

### Description of the Background Art

In general, the tread portion of a heavy duty tire used, for example, for a large-size vehicle such as a truck and a bus has a plurality of main grooves continuously extending in the tire circumferential direction, and land portions demarcated by these main grooves. Such heavy duty tires are required to have desired tire total life and wear resistance (high severity) from an environmental point of view, etc., and, for example, improvements have been made in terms of tread pattern and blending formula.

For example, JP 2018 150420 A discloses rubber compositions for a tire comprising combinations of natural rubber (i.e. an isoprene-based rubber), styrene butadiene rubber and butadiene rubber as rubber component as well as carbon black having CTAB surface of 170 m²/g or more. Japanese Laid-Open Patent Publication No. 2016-088343 discloses a heavy duty tire that includes a tread portion having circumferential grooves continuously extending in a zigzag manner in the tire circumferential direction and center inclined grooves provided between the circumferential grooves so as to demarcate a plurality of center blocks and in which a predetermined shape is provided to each center block, thereby achieving excellent wear resistance, etc. As described above, from an environmental point of view, etc., it is required to provide a heavy duty tire having excellent wear resistance and block chipping resistance.

### SUMMARY OF THE INVENTION

The present invention has been made to solve the above-described problem, and an object of the present invention is to provide a tread rubber composition and a tire that have excellent block chipping resistance and wear resistance.

The present invention is directed to a tire including a tread portion formed from a tread rubber composition, wherein the tread portion has a plurality of types of blocks or block pieces, and a sum of a length in a tire circumferential direction and a length in a tire axial direction of at least one type of the plurality of types of blocks and the block pieces is not less than 80 mm, wherein the tread rubber composition contains a rubber component including an isoprene-based rubber, a butadiene rubber, and a styrene-butadiene rubber, and a carbon black having an average particle diameter not greater than 20 nm and/or a cetyltrimethylammonium bromide adsorption specific surface area not less than 130 m²/g, wherein an amount of the isoprene-based rubber in 100% by mass of the rubber component is not less than 56% by mass, and the rubber composition satisfies hardness (Hs) ≥ 72 and elongation at break (EB) ≥ 420%, wherein the hardness is measured at 25°C with a type A durometer according to "Rubber, vulcanized or thermoplastic - Determination of hardness - Part 3: Durometer method" in JIS K6253-3 (2012), and wherein the elongation at break is measured by carrying out a tensile test at 23°C based on JIS K6251 (2010) using a No. 7 dumbbell type test piece as a test piece.

In the tire, a height of each block or a height of each block piece is preferably equal to or greater than 15 mm and less than 25 mm.

The tire is preferably a heavy-duty pneumatic tire.

According to the present invention, since the tread rubber composition contains a rubber component including an isoprene-based rubber, a butadiene rubber, and a styrene-butadiene rubber, and a specific carbon black in predetermined blending amounts, and has a predetermined hardness (Hs) and elongation at break (EB), block chipping resistance and wear resistance are significantly improved.

### BRIEF DESCRIPTION OF THE DRAWINGS

FIG. 1 is a development of a tread portion of a tire according to an embodiment of the present invention;
FIG. 2 is an enlarged view of a crown land portion in FIG. 1;
FIG. 3 is an enlarged view of a crown block in FIG. 2;
FIG. 4(a) is a cross-sectional view taken along a line A-A in FIG. 2;
FIG. 4(b) is an enlarged view of a crown sipe;
FIG. 5 is an enlarged view of a middle land portion in FIG. 1;
FIG. 6 is a cross-sectional view taken along a line B-B in FIG. 5;
FIG. 7 is an enlarged view of a shoulder land portion in FIG. 1;
FIG. 8(a) is a cross-sectional view taken along a line C-C in FIG. 7; and
FIG. 8(b) is a cross-sectional view taken along a line D-D in FIG. 7.

### DESCRIPTION OF THE PREFERRED EMBODIMENTS

The tread rubber composition of the present invention contains a rubber component including an isoprene-based rubber, a butadiene rubber, and a styrene-butadiene rubber, and a specific carbon black in predetermined blending amounts, and satisfies Hs ≥ 72 and EB ≥ 420%. By satisfying specific hardness and elongation at break with the predetermined blending amounts, block chipping resistance and wear resistance are significantly improved.

The reason why block chipping resistance and wear resistance are improved as described is not clear, but such improvement is inferred to be achieved by the following effects.

First, by blending a styrene-butadiene rubber into a conventional isoprene-based rubber/butadiene rubber composition, reinforcement performance with carbon black is improved, so that wear resistance and block chipping resistance are improved. Particularly, when a specific carbon black is blended, reinforcement performance with the polymer is ensured, so that wear resistance and block chipping resistance are significantly improved. That is, by dispersing a small amount of a styrene-butadiene rubber in the polymer of the isoprene-based rubber/butadiene rubber, a three-phase state of isoprene-based rubber/butadiene rubber/styrene-butadiene rubber is obtained, and the predetermined carbon black is dispersed near the boundaries of the respective phases, whereby the connection between each phase is strengthened. As a result, it is inferred that a rubber composition capable of absorbing shocks is obtained, and wear resistance and block chipping resistance are significantly improved. Furthermore, deformation of each block is inhibited by increasing the hardness (Hs) of the rubber, and good elongation at break (EB) is ensured by using an isoprene-based rubber such as NR having a high molecular weight in a predetermined amount or more, so that block chipping resistance is significantly improved. Due to the above effects, it is inferred that block chipping resistance and wear resistance are significantly (synergistically) improved.

Hereinafter, the tread rubber composition of the present invention and an embodiment of a tire in which the tread rubber composition is used will be described with reference to the drawings.

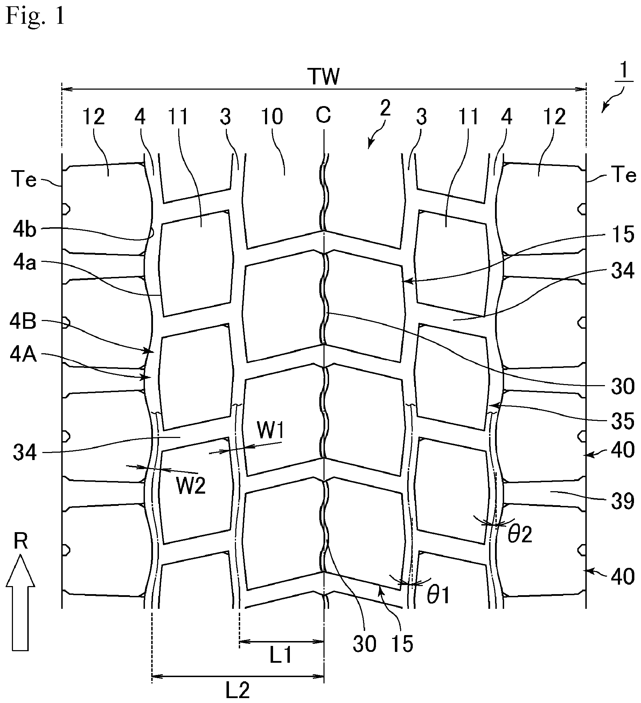

FIG. 1 is a development of a tread portion 2 of a tire 1 according to an embodiment of the present invention. The tire 1 of the present embodiment can be used, for example, as various tires such as a pneumatic tire for a passenger car or a heavy-duty vehicle and a non-pneumatic tire the interior of which is not filled with pressurized air. The tire 1 of the present embodiment is suitably used, for example, as a heavy-duty pneumatic tire.

As shown in FIG. 1, the tire 1 has a tread portion 2 having a designated rotational direction R. The rotational direction R is indicated, for example, on a sidewall portion (not shown) by characters or symbols.

The tread portion 2 has main grooves (crown main groove 3 and shoulder main groove 4) continuously extending in the tire circumferential direction. In this example, one crown main groove 3 is provided at each side of a tire equator C. One shoulder main groove 4 is provided between one crown main groove 3 and a tread edge Te, and one shoulder main groove 4 is provided between the other crown main groove 3 and another tread edge Te.

In the case of a pneumatic tire, each tread edge Te is a ground contact position at the outermost side in the tire axial direction when: a normal load is applied to the tire 1 in a normal state where the tire 1 is mounted to a normal rim (not shown) and inflated to a normal internal pressure and no load is applied to the tire 1; and the tire 1 is brought into contact with a flat surface at a camber angle of 0°.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the "maximum value" indicated in the table "TIRE LOAD LIMITS AT VARIOUS COLD INFLATION PRESSURES" in the TRA standard, or the "LOAD CAPACITY" in the ETRTO standard.

Each crown main groove 3 preferably extends, for example, in a zigzag manner. Regarding the inclined elements of the zigzag of the crown main groove 3, a maximum inclination angle θ1 relative to the tire circumferential direction is, for example, preferably 3 to 7°.

The distance L1 in the tire axial direction from the tire equator C to a groove center line of each crown main groove 3 is, for example, preferably 0.15 to 0.25 times a tread width TW. The tread width TW is the distance in the tire axial direction from one tread edge Te to the other tread edge Te in the normal state.

Each crown main groove 3 preferably has, for example, a groove width W1 that is 3 to 5% of the tread width TW.

Each shoulder main groove 4 extends, for example, in a zigzag manner. Regarding the inclined elements of the zigzag of the shoulder main groove 4, a maximum inclination angle θ2 relative to the tire circumferential direction is, for example, preferably larger than the angle θ1 of the crown main groove 3. Specifically, the angle θ2 is, for example, preferably 8 to 12°. Such a shoulder main groove 4 can exhibit excellent drainage performance.

In each shoulder main groove 4 of the present embodiment, for example, the amplitude of a groove edge 4b at the tread edge Te side is larger than the amplitude of a groove edge 4a at the tire equator C side. Such a shoulder main groove 4 serves to evenly wear the groove edges 4a and 4b.

The distance L2 in the tire axial direction from the tire equator C to a groove center line of each shoulder main groove 4 is, for example, preferably 0.30 to 0.40 times the tread width TW.

Each shoulder main groove 4 has, for example, a groove width W2 that is 3 to 6% of the tread width TW. In a preferable mode, each shoulder main groove 4 includes first portions 4A each having a groove width larger than the maximum groove width of the crown main groove 3, and second portions 4B each having a groove width smaller than the maximum groove width of the crown main groove 3. Such a shoulder main groove 4 can generate pumping noise having a frequency different from that by the crown main groove 3. Thus, the noise generated by the crown main groove 3 and the shoulder main groove 4 can be made to become white noise.

In the case of a heavy-duty pneumatic tire, the crown main grooves 3 and the shoulder main grooves 4 each preferably have, for example, a groove depth of 20 to 25 mm. Such crown main grooves 3 and shoulder main grooves 4 can exhibit excellent wet performance.

In the tread portion 2, a crown land portion 10, a pair of middle land portions 11, and a pair of shoulder land portions 12 are demarcated by providing the above-described crown main grooves 3 and shoulder main grooves 4.

A rubber composition (tread rubber composition) that forms the tread portion 2 (the crown land portion 10, the pair of middle land portions 11, the pair of shoulder land portions 12, the crown main grooves 3, the shoulder main grooves 4, etc.) contains a rubber component containing an isoprene-based rubber, a styrene-butadiene rubber, and a butadiene rubber, and a carbon black having a predetermined average particle diameter and/or cetyltrimethylammonium bromide adsorption specific surface area, contains the isoprene-based rubber in a predetermined amount, and has a predetermined hardness (Hs) and elongation at break (EB).

Examples of the isoprene-based rubber include isoprene rubber (IR), epoxidized isoprene rubber, hydrogenated isoprene rubber, grafted isoprene rubber, natural rubber (NR), deproteinized natural rubber (DPNR), ultra-pure natural rubber (UPNR), epoxidized natural rubber (ENR), hydrogenated natural rubber (HNR), and grafted natural rubber. These rubbers may be used individually, or two or more of these rubbers may be used in combination.

In the rubber composition, the amount of the isoprene-based rubber in 100% by mass of the rubber component is not less than 56% by mass, preferably not less than 60% by mass, and more preferably not less than 65% by mass. In addition, the upper limit of the amount is preferably not greater than 85% by mass, more preferably not greater than 80% by mass, and further preferably not greater than 75% by mass. When the amount is within the above range, good block chipping resistance and wear resistance tend to be achieved.

Examples of the styrene-butadiene rubber (SBR) include an emulsion-polymerized styrene-butadiene rubber (E-SBR) and a solution-polymerized styrene-butadiene rubber (S-SBR).

The SBR may be either an unmodified SBR or a modified SBR. The modified SBR only needs to be an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

Examples of the above functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), an alkoxysilyl group (preferably, an alkoxysilyl group having 1 to 6 carbon atoms), and an amide group, are preferable.

Examples of the modifier used for the modified SBR include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane;

amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl] sulfide;

N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ωo-laurolactam, N-vinyl-ω-laurolactam, N-methyl-β-propiolactam, and N-phenyl-β-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone.

Modification with the above compounds (modifiers) can be carried out by a known method.

As the SBR, for example, SBRs manufactured by and available from Sumitomo Chemical Co., Ltd., JSR Corporation, Asahi Kasei Corporation, Zeon Corporation, etc., can be used.

The styrene content of the SBR is preferably not less than 5% by mass, more preferably not less than 10% by mass, further preferably not less than 15% by mass, and particularly preferably not less than 20% by mass. In addition, the styrene content is preferably not greater than 60% by mass, more preferably not greater than 40% by mass, further preferably not greater than 30% by mass, and particularly preferably not greater than 25% by mass. When the styrene content is set to be within the above range, good block chipping resistance, wear resistance, and heat generation resistance tend to be achieved. The styrene content of the SBR is calculated by ¹H-NMR measurement.

In the rubber composition, the amount of the SBR in 100% by mass of the rubber component is preferably not less than 5% by mass, more preferably not less than 10% by mass, and further preferably not less than 15% by mass. When the amount is set to be not less than the lower limit, good block chipping resistance and wear resistance tend to be achieved. In addition, the upper limit of the amount is preferably not greater than 60% by mass, more preferably not greater than 50% by mass, and further preferably not greater than 40% by mass. When the SBR is used in a large amount, there is a concern about deterioration of heat generation performance. However, when the amount is set to be not greater than the upper limit, deterioration of heat generation performance tends to be able to be inhibited.

As the butadiene rubber (BR), for example, a BR having a high cis content, a BR having a low cis content, a BR containing syndiotactic polybutadiene crystal, etc., can be used. These BRs may be used individually, or two or more of these BRs may be used in combination.

The cis content of the BR is preferably not less than 90% by mass, more preferably not less than 95% by mass, and further preferably not less than 98% by mass. The upper limit of the cis content is not particularly limited. When the cis content is within the above range, the effect tends to be more favorably achieved.

The cis content of the BR can be measured by infrared absorption spectrometry.

The BR may be either an unmodified BR or a modified BR. Examples of the modified BR include modified BRs into which the aforementioned functional group is introduced.

As the BR, for example, products of Ube Industries, Ltd., JSR Corporation, Asahi Kasei Corporation, Zeon Corporation, etc., can be used.

In the rubber composition, the amount of the BR in 100% by mass of the rubber component is preferably not less than 5% by mass, more preferably not less than 10% by mass, and further preferably not less than 15% by mass. In addition, the upper limit of the amount is preferably not greater than 60% by mass, more preferably not greater than 50% by mass, and further preferably not greater than 40% by mass. When the amount is within the above range, good block chipping resistance and wear resistance tend to be achieved, and processability also tends to be easily ensured.

In the rubber composition, another rubber component other than the isoprene-based rubber, the BR, and the SBR may be blended. Examples of other rubber components that can be blended include diene-based rubbers such as styrene-isoprene-butadiene rubber (SIBR), ethylene-propylene-diene rubber (EPDM), chloroprene rubber (CR), acrylonitrile butadiene rubber (NBR), and isobutylene-isoprene-rubber (IIR). The rubber components may be used individually, or two or more of these rubber components may be used in combination.

The rubber composition contains a carbon black having an average particle diameter not greater than 20 nm and/or a cetyltrimethylammonium bromide adsorption specific surface area (CTAB) not less than 130 m²/g (also referred to as carbon black (A)).

From the viewpoint of block chipping resistance and wear resistance, the average particle diameter of the carbon black (A) is preferably not greater than 20 nm, more preferably not greater than 17 nm, and further preferably not greater than 15 nm. The lower limit of the average particle diameter is not particularly limited, but, from the viewpoint of dispersibility and the like, the average particle diameter is preferably not less than 5 nm and more preferably not less than 10 nm.

The average particle diameter of the carbon black is a number average particle diameter and is measured with a transmission electron microscope.

From the viewpoint of block chipping resistance and wear resistance, the CTAB of the carbon black (A) is preferably not less than 130 m²/g, more preferably not less than 140 m²/g, further preferably not less than 145 m²/g, and particularly preferably not less than 150 m²/g. The upper limit of the CTAB is not particularly limited, but, from the viewpoint of dispersibility and the like, the CTAB is preferably not greater than 250 m²/g, more preferably not greater than 200 m²/g, and further preferably not greater than 180 m²/g.

In the present description, the CTAB of the carbon black is a value measured according to JIS K6217-3: 2001.

From the viewpoint of block chipping resistance and wear resistance, the nitrogen adsorption specific surface area (N₂SA) of the carbon black (A) is preferably not less than 125 m²/g, more preferably not less than 145 m²/g, further preferably not less than 150 m²/g, and particularly preferably not less than 155 m²/g. The upper limit of the N₂SA is not particularly limited, but, from the viewpoint of dispersibility and the like, the N₂SA is preferably not greater than 250 m²/g, more preferably not greater than 200 m²/g, and further preferably not greater than 180 m²/g.

The N₂SA of the carbon black is obtained according to JIS K6217-2: 2001.

From the viewpoint of block chipping resistance and wear resistance, the iodine adsorption amount (IA) (mg/g) of the carbon black (A) is preferably not less than 120 mg/g, more preferably not less than 125 mg/g, further preferably not less than 130 mg/g, and particularly preferably not less than 140 mg/g. The upper limit of the iodine adsorption amount (IA) is not particularly limited, but, from the viewpoint of dispersibility and the like, the iodine adsorption amount (IA) is preferably not greater than 200 mg/g, more preferably not greater than 180 mg/g, and further preferably not greater than 160 mg/g.

From the viewpoint of block chipping resistance and wear resistance, the ratio (CTAB/IA) of the cetyltrimethylammonium bromide adsorption specific surface area (CTAB) to the iodine adsorption amount (IA) (mg/g) of the carbon black (A) is preferably 0.85 to 1.35 m²/mg, more preferably 0.92 to 1.30 m²/mg, and further preferably 1.00 to 1.25 m²/mg.

In the present description, the iodine adsorption amount (IA) of the carbon black is a value measured according to JIS K6217-1: 2001.

A surface activity index represented by CTAB/IA can be considered as an index of the crystallinity (graphitization rate) of the carbon black. That is, higher CTAB/IA indicates that crystallization is less advanced, and the interaction between the carbon black and the rubber component tends to increase. In addition, CTAB/IA is also positioned as a parameter for evaluating the amount of acidic functional groups present on the surface of the carbon black. The acidic functional groups present on the surface of the carbon black contribute to the interaction with the rubber component, and higher CTAB/IA indicates that a larger number of acidic functional groups are present on the surface of the carbon black. Therefore, when the CTAB/IA is within the above range, a more significant reinforcing effect can be exerted on the rubber component, and excellent block chipping resistance and wear resistance are achieved.

From the viewpoint of block chipping resistance and wear resistance, the dibutyl phthalate absorption amount (DBP) of the carbon black (A) is preferably not less than 120 cm³/100 g, more preferably not less than 125 cm³/100 g, and further preferably not less than 135 cm³/100 g. The upper limit of the DBP is not particularly limited, but, from the viewpoint of dispersibility and the like, the DBP is preferably not greater than 180 cm³/100 g, more preferably not greater than 170 cm³/100 g, and further preferably not greater than 160 cm³/100 g.

The DBP of the carbon black is measured according to JIS K 6217-4: 2001.

Examples of the carbon black (A) include SAF, etc. These carbon blacks may be used individually, or two or more of these carbon blacks may be used in combination. In addition, the carbon black (A) can be produced by the production methods described in Japanese Laid-Open Patent Publication No. 2000-319539, Japanese Laid-Open Patent Publication (translation of PCT application) No. H8-507555, etc.

In the rubber composition, the amount of the carbon black (A) per 100 parts by mass of the rubber component is preferably not less than 5 parts by mass, more preferably not less than 10 parts by mass, and further preferably not less than 15 parts by mass. When the amount is not less than the lower limit, good block chipping resistance and wear resistance tend to be achieved. In addition, from the viewpoint of dispersibility and the like, the amount is preferably not greater than 70 parts by mass, more preferably not greater than 60 parts by mass, further preferably not greater than 50 parts by mass, and particularly preferably not greater than 30 parts by mass.

Preferably, in the rubber composition, a carbon black (also referred to as another carbon black) other than the carbon black (A) is further blended. In this case, block chipping resistance and wear resistance can be synergistically improved.

As the other carbon black, for example, a carbon black having an average particle diameter exceeding 20 nm and not greater than 25 nm and/or a cetyltrimethylammonium bromide adsorption specific surface area (CTAB) equal to or greater than 100 m²/g and less than 130 m²/g (also referred to as carbon black (B)) is suitable for use.

Although the average particle diameter of the carbon black (B) exceeds 20 nm and is not greater than 25 nm (greater than 20 nm and not greater than 25 nm), the lower limit of the average particle diameter is preferably not less than 21 nm from the viewpoint of dispersibility and the like. From the viewpoint of block chipping resistance and wear resistance, the upper limit of the average particle diameter is preferably not greater than 24 nm and more preferably not greater than 23 nm.

From the viewpoint of block chipping resistance and wear resistance, the CTAB of the carbon black (B) is preferably not less than 105 m²/g and more preferably not less than 110 m²/g. The upper limit of the CTAB is not particularly limited, but, from the viewpoint of dispersibility and the like, the CTAB is preferably not greater than 125 m²/g and more preferably not greater than 120 m²/g.

The average particle diameter and the CTAB of the other carbon black such as the carbon black (B) can be measured by the same methods as described above.

The amount of the carbon black (B) per 100 parts by mass of the rubber component is preferably not less than 5 parts by mass, more preferably not less than 10 parts by mass, and further preferably not less than 15 parts by mass. When the amount is not less than the lower limit, good block chipping resistance and wear resistance tend to be achieved. In addition, from the viewpoint of dispersibility and the like, the amount is preferably not greater than 100 parts by mass, more preferably not greater than 50 parts by mass, and further preferably not greater than 30 parts by mass.

The other carbon black is not particularly limited, but examples of the other carbon black include N220, N234, N219, N339, N330, N326, N351, N550, and N762. For example, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used. These carbon blacks may be used individually, or two or more of these carbon blacks may be used in combination. From the viewpoint of wear resistance and cost, N220 is particularly preferable.

The amount of carbon black (the total amount of the carbon black (A) and the other carbon black) per 100 parts by mass of the rubber component is preferably not less than 20 parts by mass, more preferably not less than 40 parts by mass, further preferably not less than 45 parts by mass, and particularly preferably not less than 50 parts by mass. When the amount is not less than the lower limit, good block chipping resistance and wear resistance tend to be achieved. In addition, from the viewpoint of dispersibility and the like, the amount is preferably not greater than 150 parts by mass, more preferably not greater than 100 parts by mass, further preferably not greater than 80 parts by mass, and particularly preferably not greater than 70 parts by mass.

The amount of the carbon black (A) in 100% by mass of the carbon black is preferably not less than 5% by mass, more preferably not less than 20% by mass, and further preferably not less than 30% by mass. The upper limit of the amount is preferably not greater than 90% by mass, more preferably not greater than 80% by mass, and further preferably not greater than 70% by mass. When the amount is within the above range, good block chipping resistance and wear resistance tend to be achieved.

In the rubber composition, silica may be blended.

In the case where silica is blended in the rubber composition, from the viewpoint of grip performance, the amount of the silica per 100 parts by mass of the rubber component is preferably not less than 3.0 parts by mass and more preferably not less than 5.0 parts by mass. The amount is preferably not greater than 30 parts by mass, more preferably not greater than 20 parts by mass, and further preferably not greater than 15 parts by mass.

The nitrogen adsorption specific surface area (N₂SA) of the silica is preferably not less than 80 m²/g, more preferably not less than 115 m²/g, and further preferably not less than 150 m²/g. When the N₂SA is set to be not less than the lower limit, good grip performance tends to be achieved. In addition, the N₂SA is preferably not greater than 400 m²/g, more preferably not greater than 270 m²/g, and further preferably not greater than 250 m²/g. When the N₂SA is set to be not greater than the upper limit, good silica dispersibility tends to be achieved.

The N₂SA of the silica is a value measured by the BET method according to ASTM D3037-93.

The silica is not particularly limited, and, for example, dry-process silica (anhydrous silica), wet-process silica (hydrous silica), etc., can be used, but wet-process silica is preferable for the reason that it has a higher silanol group content. As commercially available products, products of Degussa, Tosoh Silica Corporation, Solvay Japan, Ltd., Tokuyama Corporation, etc., can be used. One of these types of silica may be used individually, or two or more thereof may be used in combination.

In the rubber composition, another filler other than the carbon black and the silica may be blended. Examples of the other filler include calcium carbonate, talc, alumina, clay, aluminum hydroxide, and mica.

In the case where the rubber composition contains silica, the rubber composition preferably contains a silane coupling agent together with the silica.

As the silane coupling agent, any silane coupling agent that is conventionally used in combination with silica in the rubber industry can be used. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used individually, or two or more of these silane coupling agents may be used in combination. Among them, sulfide silane coupling agents and mercapto silane coupling agents are preferable.

In the case where the rubber composition contains a silane coupling agent, the amount of the silane coupling agent per 100 parts by mass of the silica is preferably not less than 2 parts by mass and more preferably not less than 5 parts by mass. When the amount is set to be not less than the lower limit, the effect to be achieved by blending the silane coupling agent tends to be obtained. In addition, the amount is preferably not greater than 20 parts by mass and more preferably not greater than 15 parts by mass. When the amount is set to be not greater than the upper limit, an effect corresponding to the blending amount is achieved, and good processability at the time of kneading tends to be achieved.

In the rubber composition, a softener (a softener in liquid form at normal temperature (25°C)) such as an oil and a liquid diene-based polymer may be blended.

Examples of the oil include process oils such as paraffinic, aromatic, and naphthenic process oils.

The liquid diene-based polymer has a weight-average molecular weight (Mw) of preferably 1.0×10³ to 2.0×10⁵ and more preferably 3.0×10³ to 1.5×10⁴, the weight-average molecular weight (Mw) being measured by gel permeation chromatography (GPC) in terms of polystyrene. When the Mw is set to be not less than the lower limit, good wear resistance and fracture properties are achieved, and sufficient durability tends to be able to be ensured. In addition, when the Mw is set to be not greater than the upper limit, a polymerization solution has good viscosity, and excellent productivity tends be achieved.

In the present invention, the Mw of the liquid diene-based polymer is a value that is measured by gel permeation chromatography (GPC) and obtained by polystyrene conversion.

Examples of the liquid diene-based polymer include liquid styrene-butadiene copolymers (liquid SBRs), liquid butadiene polymers (liquid BRs), liquid isoprene polymers (liquid IRs), liquid styrene-isoprene copolymers (liquid SIRs), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers. The terminals and the main chains of these polymers may be modified by polar groups. Among them, liquid IRs and liquid SBRs are preferable.

From the viewpoint of block chipping resistance and wear resistance, in the rubber composition, the amount of the softener (softener total amount) per 100 parts by mass of the rubber component is preferably not greater than 15 parts by mass, more preferably not greater than 10 parts by mass, and further preferably not greater than 5 parts by mass. The lower limit is not particularly limited, and the rubber composition does not have to contain any softener.

In the present description, the amount of the softener also includes the amount of oil included in oil-extended rubber.

In the rubber composition, a resin in solid form at normal temperature (25°C) may be blended. The amount of the resin per 100 parts by mass of the rubber component is preferably 3 to 50 parts by mass and more preferably 7 to 40 parts by mass.

Examples of the resin include aromatic vinyl polymers, coumarone-indene resins, indene resins, rosin-based resins, terpene-based resins, and acrylic-based resins. As commercially available products, products of Maruzen Petrochemical Co., Ltd., Sumitomo Bakelite Co., Ltd., YASUHARA CHEMICAL CO., LTD, Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., TOAGOSEI CO., LTD., etc., can be used. These resins may be used individually, or two or more of these resins may be used in combination. Among them, aromatic vinyl polymers, coumarone-indene resins, terpene-based resins, and rosin-based resins are preferable.

The above aromatic vinyl polymers may be resins obtained by polymerizing α-methylstyrene and/or styrene, and examples of such a resin include styrene homopolymers, α-methylstyrene homopolymers, and copolymers of α-methylstyrene and styrene. Among them, copolymers of α-methylstyrene and styrene are preferable.

The above coumarone-indene resins refer to resins that contain coumarone and indene as main monomer components that form the backbone (main chain) of the resins. Examples of the monomer components included in the backbone other than coumarone and indene include styrene, α-methylstyrene, methylindene, and vinyltoluene.

The above indene resins refer to resins that contain indene as a main monomer component that forms the backbone (main chain) of the resins.

The above rosin-based resins (rosins) can be classified depending on whether the rosins are modified or not, that is, can be classified into non-modified rosins (unmodified rosins) and modified rosin products (rosin derivatives). Examples of non-modified rosins include tall rosin (also called tall oil rosin), gum rosin, wood rosin, disproportionated rosins, polymerized rosins, hydrogenated rosins, and other chemically modified rosins. Modified rosins are obtained by modifying non-modified rosins, and examples of modified rosin products include rosin esters, unsaturated carboxylic acid-modified rosins, unsaturated carboxylic acid-modified rosin esters, amide compounds of rosins, and amine salts of rosins.

The rosin-based resins preferably have a carboxyl group content not excessively high and preferably have an appropriate acid value. Specifically, the acid values of rosin-based resins ordinarily exceed 0 mg KOH/g, and is, for example, not greater than 200 mg KOH/g, preferably not greater than 100 mg KOH/g, more preferably not greater than 30 mg KOH/g, and further preferably not greater than 10 mg KOH/g.

The acid values can be measured in accordance with Examples described later. When, for example, a rosin has an excessively high acid value, the acid value can be adjusted to fall within the above range by reducing the carboxyl groups of the rosin through known esterification treatment.

As the above terpene-based resins, a polyterpene resin obtained by polymerizing a terpene compound, an aromatic modified terpene resin obtained by polymerizing a terpene compound and an aromatic compound, etc., can be used. Moreover, hydrogenated products of these resins can also be used.

The above polyterpene resin is a resin that is obtained by polymerizing a terpene compound. The terpene compound is a hydrocarbon represented by a composition (C₅H₈)ₙ and an oxygenated derivative thereof, and is a compound having, as the basic backbone, a terpene classified into monoterpene (C₁₀H₁₆), sesquiterpene (C₁₅H₂₄), diterpene (C₂₀H₃₂), and the like. Examples of the terpene compound include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the above polyterpene resins include pinene resins, limonene resins, dipentene resins, and pinene-limonene resins which are formed from the above-described terpene compounds. Among them, pinene resins are preferable since a polymerization reaction is easy and since natural pine resin is a raw material and thus the cost is low. In general, pinene resins contain both α-pinene and β-pinene, which are isomeric with each other. Depending on contained components, pinene resins are classified into β-pinene resins containing β-pinene as a main component, and α-pinene resins containing α-pinene as a main component.

Examples of the above aromatic modified terpene resin include terpene-phenol resins formed from the above terpene compounds and phenol-based compounds, and terpene-styrene resins formed from the above terpene compounds and styrene-based compounds. Moreover, terpene-phenol-styrene resins formed from the above terpene compounds, phenol-based compounds, and styrene-based compounds can also be used. Examples of phenol-based compounds include phenol, bisphenol A, cresol, and xylenol. Examples of styrene-based compounds include styrene and α-methylstyrene.

The rubber composition preferably contains sulfur (sulfur vulcanization agent).

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used individually, or two or more of these sulfurs may be used in combination.

The amount of the sulfur (sulfur vulcanization agent) per 100 parts by mass of the rubber component is preferably not less than 0.5 parts by mass, more preferably not less than 0.8 parts by mass, and further preferably not less than 1.0 part by mass. When the amount is set to be not less than the lower limit, good block chipping resistance and wear resistance tend to be achieved. The upper limit of the amount is not particularly limited, but the amount is preferably not greater than 5.0 parts by mass, more preferably not greater than 3.0 parts by mass, further preferably not greater than 2.5 parts by mass, and particularly preferably not greater than 2.0 parts by mass.

The rubber composition preferably contains a vulcanization accelerator.

Examples of the vulcanization accelerator include: thiazole-based vulcanization accelerators such as 2-mercaptobenzothiazole, di-2-benzothiazolyl disulfide (DM (2,2'-dibenzothiazolyl disulfide)), and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, sulfenamide-based vulcanization accelerators and guanidine-based vulcanization accelerators are preferable.

From the viewpoint of vulcanization characteristics and the like, the amount of the vulcanization accelerator per 100 parts by mass of the rubber component is preferably not less than 0.5 parts by mass and more preferably not less than 1.0 part by mass. In addition, the amount is preferably not greater than 8.0 parts by mass, more preferably not greater than 5.0 parts by mass, and further preferably not greater than 3.0 parts by mass.

The rubber composition may contain a wax. The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. As commercially available products, products of Ouchi Shinko Chemical Industrial Co., Ltd., NIPPON SEIRO CO., LTD., Seiko Chemical Co., Ltd., etc., can be used. These waxes may be used individually, or two or more of these waxes may be used in combination. Among them, petroleum waxes are preferable, and paraffin wax is more preferable.

The amount of the wax per 100 parts by mass of the rubber component is preferably not less than 0.5 parts by mass and more preferably not less than 1 part by mass. In addition, the amount is preferably not greater than 10 parts by mass and more preferably not greater than 6 parts by mass.

The rubber composition may contain an antioxidant.

The antioxidant is not particularly limited, and examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. As commercially available products, products of Seiko Chemical Co., Ltd., Sumitomo Chemical Co., Ltd., Ouchi Shinko Chemical Industrial Co., Ltd., Flexsys, etc., can be used. These antioxidants may be used individually, or two or more of these antioxidants may be used in combination. Among them, p-phenylenediamine-based antioxidants (more preferably N-(1,3-dimethylbutyl)-N'-phenyl-p-phenylenediamine) are preferable.

The amount of the antioxidant per 100 parts by mass of the rubber component is preferably not less than 0.3 parts by mass and more preferably not less than 1 part by mass. In addition, the amount is preferably not greater than 7 parts by mass, more preferably not greater than 6 parts by mass, and further preferably not greater than 5 parts by mass.

The rubber composition may contain a fatty acid, particularly stearic acid.

As the stearic acid, conventionally known stearic acids can be used. For example, products of NOF Corporation, Kao Corporation, FUJIFILM Wako Pure Chemical Corporation, New Japan Chemical Co., Ltd., etc., can be used.

The amount of the fatty acid per 100 parts by mass of the rubber component is preferably not less than 0.5 parts by mass, more preferably not less than 1 part by mass, and further preferably not less than 2.5 parts by mass. In addition, the amount is preferably not greater than 10 parts by mass and more preferably not greater than 5 parts by mass.

The rubber composition may contain zinc oxide.

As the zinc oxide, conventionally known zinc oxides can be used. For example, products of Mitsui Mining & Smelting Co., Ltd., Toho Zinc Co., Ltd., HAKUSUI TECH CO., LTD., SEIDO CHEMICAL INDUSTRY CO., LTD., Sakai Chemical Industry Co., Ltd., etc., can be used.

The amount of the zinc oxide per 100 parts by mass of the rubber component is preferably not less than 0.5 parts by mass and more preferably not less than 1 part by mass. In addition, the amount is preferably not greater than 5 parts by mass and more preferably not greater than 4 parts by mass.

In addition to the aforementioned components, additives that are generally used in the tire industry can be blended in the rubber composition, and examples of the additives include surfactants.

As a method for producing the rubber composition, a known method can be used. For example, the rubber composition can be produced by a method in which the components are kneaded by using a rubber kneading device such as an open roll, a Banbury mixer, or a kneader, and then vulcanization is performed.

As for the kneading conditions, in a base kneading step of kneading the additives other than a cross-linking agent (vulcanizing agent) and the vulcanization accelerator, the kneading temperature is normally 100 to 180°C and preferably 120 to 170°C. In a finish kneading step of kneading the vulcanizing agent and the vulcanization accelerator, the kneading temperature is normally not higher than 120°C and preferably 85 to 110°C. In addition, a composition obtained by kneading the vulcanizing agent and the vulcanization accelerator is normally subjected to vulcanization processing such as press vulcanization. The vulcanization temperature is normally 140 to 190°C and preferably 150 to 185°C.

The rubber composition (rubber composition after vulcanization) satisfies hardness (Hs) ≥ 72. The upper limit of the Hs is not particularly limited, but Hs ≤ 80 is preferably satisfied, Hs ≤ 78 is more preferably satisfied, and Hs ≤ 75 is further preferably satisfied.

In the present description, the Hs is measured at 25°C with a type A durometer according to "Rubber, vulcanized or thermoplastic - Determination of hardness - Part 3: Durometer method" in JIS K6253-3 (2012).

The rubber composition (rubber composition after vulcanization) satisfies elongation at break (EB) ≥ 420%. From the viewpoint of block chipping resistance and wear resistance, EB ≥ 450% is preferably satisfied, and EB ≥ 480% is more preferably satisfied. The upper limit of the EB is not particularly limited, but EB ≤ 700% is preferably satisfied, EB ≤ 650% is more preferably satisfied, and EB ≤ 600% is further preferably satisfied.

The EB is measured by carrying out a tensile test at 23°C based on JIS K6251 (2010) using a No. 7 dumbbell type test piece as a test piece.

The hardness (Hs) and the elongation at break (EB) of the rubber composition can be adjusted on the basis of the types and the amounts of chemicals (particularly, a rubber component and a filler) blended in the rubber composition. For example, the Hs and the EB tend to be increased when three types of an isoprene-based rubber, a BR, and an SBR are used as a rubber component, the amount of a filler is increased, the amount of a softener is decreased, or carbon black is used as a type of filler.

Specific examples of methods for adjusting the Hs and the EB include (1) a method of using three types of an isoprene-based rubber, a BR, and an SBR, (2) a method of using a high-molecular-weight rubber such as NR, (3) a method of adjusting the type or amount of the SBR, (4) a method of using a specific carbon black having a predetermined average particle diameter or CTAB, (5) a method of adjusting the amount of the specific carbon black, (6) a method of adjusting the blending ratio of the specific carbon black and another filler such as another carbon black, (7) a method of adjusting the total filler amount, etc., and methods obtained by combining these methods as appropriate.

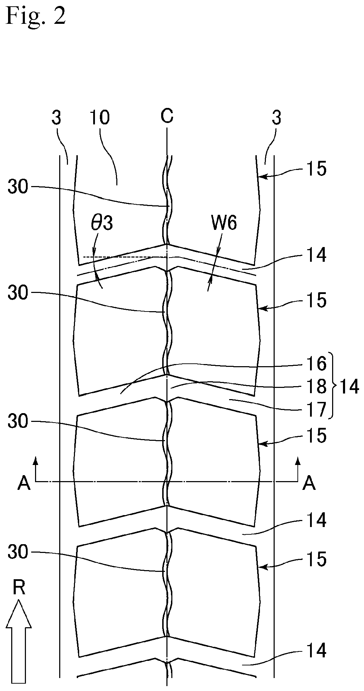

FIG. 2 shows an enlarged view of the crown land portion 10. As shown in FIG. 2, the crown land portion 10 is demarcated between a pair of the crown main grooves 3. The crown land portion 10 is divided into a row of a plurality of crown blocks 15 by a plurality of crown lateral grooves 14 connecting between the pair of the crown main grooves 3.

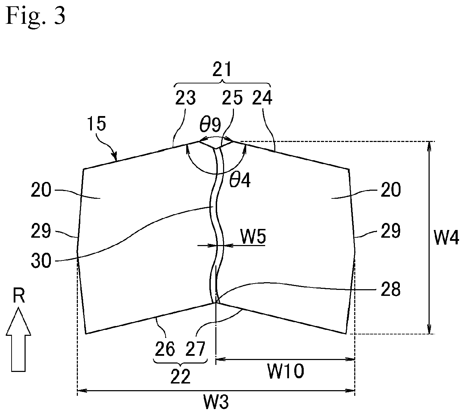

FIG. 3 shows an enlarged view of the crown block 15. As shown in FIG. 3, at least one of the crown blocks 15 has a longitudinal narrow groove (crown sipe 30) extending in a wavy manner and connecting between the crown lateral grooves 14. Accordingly, the crown block 15 includes two crown block pieces 20 demarcated by the crown sipe 30. In the present description, a "sipe (narrow groove)" means a slit having a width not greater than 2.0 mm.

The crown sipe 30 increases the frictional force on a wet road surface by its edges, and can exhibit excellent wet performance. Since the crown sipe 30 extends in a wavy manner and connects between the crown lateral grooves 14, not only an edge component in the tire circumferential direction but also an edge component in the tire axial direction can be ensured. Therefore, traction performance and cornering performance during running on a wet road surface are enhanced.

When the crown block 15 is brought into contact with the ground, the crown sipe 30 is essentially closed. Therefore, one crown block piece 20 and the other crown block piece 20, which are demarcated by the crown sipe 30, can support each other. As a result, the apparent stiffness of the crown block 15 is increased, and uneven wear resistance can be maintained. Particularly, since the crown sipe 30 extends in a wavy manner, the sipe walls thereof are strongly engaged with each other, and can exhibit an excellent supporting effect with respect to force in the tire circumferential direction. Thus, deformation of the crown block 15 during driving and during braking is reduced, and uneven wear resistance is effectively maintained.

The crown sipe 30 is preferably provided, for example, at a position at which the area ratio of the tread surfaces of the two crown block pieces 20 is 0.8 to 1.2. The crown sipe 30 of the present embodiment is provided, for example, at a center portion in the tire axial direction of the crown block 15. In a preferable mode, the crown sipe 30 divides the crown block 15 into two crown block pieces 20 having tread surfaces with substantially the same area. Accordingly, the two crown block pieces 20 are easily worn evenly, and uneven wear resistance is enhanced.

The width W5 of the crown sipe 30 is preferably not greater than 2.0 mm, more preferably not greater than 1.8 mm, and further preferably not greater than 1.6 mm, and is preferably not less than 0.5 mm, more preferably not less than 0.8 mm, and further preferably not less than 1.2 mm. Such a crown sipe 30 can enhance wet performance and uneven wear resistance in a well-balanced manner.

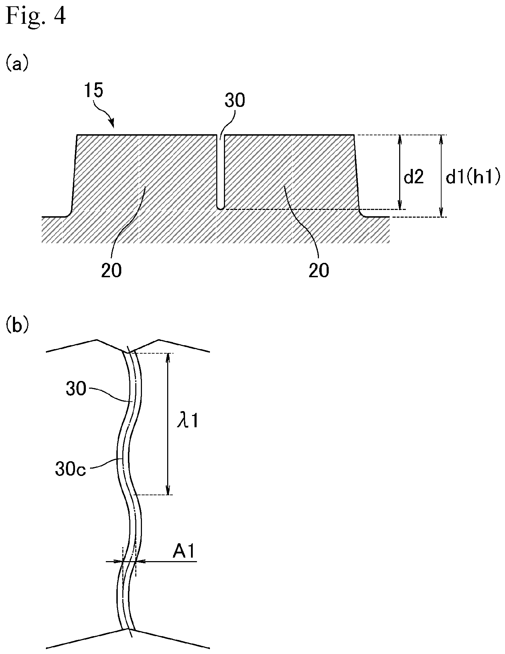

FIG. 4(a) shows a cross-sectional view of the crown sipe 30 taken along a line A-A in FIG. 2. As shown in FIG. 4(a), the crown sipe 30 preferably has, for example, a depth d2 that is 0.85 to 1.00 times the depth d1 of the crown main groove 3. Such a crown sipe 30 serves to exhibit excellent wet performance.

FIG. 4(b) shows an enlarged view of the crown sipe 30 in FIG. 3. As shown in FIG. 4(b), the crown sipe 30 extends in the tire circumferential direction while extending in a wavy manner in the tire axial direction. In a preferable mode, the crown sipe 30 extends, for example, in a sine wave shape. However, the crown sipe 30 is not limited to such a mode, and, for example, modes in which the crown sipe 30 extends in various wave shapes such as a triangular wave shape, a rectangular wave shape, and a trapezoidal wave shape are included.

The crown sipe 30 preferably extends, for example, with a smaller amplitude than the crown main groove 3 extending in a zigzag manner. A peak-to-peak amplitude amount A1 of a center line 30c of the crown sipe 30 is preferably not less than 1.0 mm and more preferably not less than 1.3 mm, and is preferably not greater than 2.0 mm and more preferably not greater than 1.7 mm. Such a crown sipe 30 can ensure an edge component in the tire axial direction while inhibiting uneven wear of the edges thereof.

The crown sipe 30 preferably extends, for example, at a smaller wavelength than the crown main groove 3 (shown in FIG. 1) extending in a zigzag manner. The wavelength λ1 of the crown sipe 30 is, for example, not less than 16.0 mm and more preferably not less than 20.0 mm, and is preferably not greater than 30.0 mm and more preferably not greater than 26.0 mm. Such a crown sipe 30 allows the sipe walls facing each other to be strongly engaged with each other while inhibiting uneven wear of the edges thereof, so that the apparent stiffness of the crown block 15 is increased.

As shown in FIG. 2, each crown lateral groove 14 connects between the pair of the crown main grooves 3. Each crown lateral groove 14 of the present embodiment has, for example, a V-shape that projects toward the toe side in the rotational direction R. The "crown lateral groove having a V-shape" includes, for example, not only a mode in which a groove center line is bent in a V-shape, but also a mode in which a groove center line is smoothly curved so as to project toward the toe side (for example, an arc shape).

Each crown lateral groove 14 of the present embodiment includes, for example, a first groove portion 16 and a second groove portion 17 extending in directions opposite to each other with respect to the tire axial direction. The first groove portion 16 and the second groove portion 17 are connected to each other by a connection portion 18. Each of the first groove portion 16 and the second groove portion 17 is, for example, preferably inclined at an angle θ3 of 10 to 20° relative to the tire axial direction.

The connection portion 18 is provided, for example, at a center portion in the tire axial direction of the crown lateral groove 14 (for example, on the tire equator C). In another mode of the present invention, the connection portion 18 may be provided at a position on one side in the tire axial direction with respect to the tire equator C.

Each crown lateral groove 14 preferably has, for example, a groove width W6 that is 0.8 to 1.2 times that of the crown main groove 3. Each crown lateral groove 14 of the present embodiment has a uniform groove width in the longitudinal direction thereof in at least the first groove portion 16 and the second groove portion 17.

Each crown block 15 of the present embodiment has, for example, a laterally long shape in which a maximum lateral width W3 in the tire axial direction is larger than a maximum longitudinal width W4 in the tire circumferential direction. The maximum lateral width W3 is, for example, preferably 1.3 to 1.7 times the maximum longitudinal width W4. Such a crown block 15 has high lateral stiffness and serves to exhibit excellent steering stability.

Each crown block 15 preferably has, for example, a V-shape that projects toward the toe side in the rotational direction R. The "crown block 15 having a V-shape" includes, for example, a mode in which the contours of a first block wall 21 and a second block wall 22 that are two block walls, of the crown block 15, facing the crown lateral grooves 14 project toward the toe side. The first block wall 21 is a block wall facing the crown lateral groove 14 at the toe side, and the second block wall 22 is a block wall facing the crown lateral groove 14 at the heel side in the rotational direction R. Each of the first block wall 21 and the second block wall 22 is not limited to a wall obtained by bending a flat surface, and may be, for example, a smoothly curved wall (for example, a wall curved in an arc).

As shown in FIG. 3, the first block wall 21 of the present embodiment has, for example, a first inclined portion 23 and a second inclined portion 24 that are inclined in directions opposite to each other with respect to the tire axial direction, and a recessed portion 25 therebetween. The angle θ4 between the first inclined portion 23 and the second inclined portion 24 is, for example, preferably 150 to 160°. The first inclined portion 23 and the second inclined portion 24 of the present embodiment extend, for example, planarly, but are not limited to such a mode.

The recessed portion 25 is recessed, for example, at the heel side of the rotational direction R. The recessed portion 25 serves to inhibit chipping or wear of an end portion, at the toe side in the rotational direction R, of the crown block 15. In a preferable mode, the crown sipe 30 is connected to the recessed portion 25. Accordingly, uneven wear at an end portion at the toe side of the crown sipe 30 can be inhibited.

In a preferable mode, the recessed portion 25 has a V-shape that is opposite to that of the crown block 15. The recessed portion 25 includes, for example, two flat surfaces that are inclined in directions opposite to each other. The angle θ9 between the two flat surfaces is, for example, 125 to 135°. Such a recessed portion 25 can further inhibit chipping or uneven wear of the top portion at the toe side of the crown block 15.

The second block wall 22 has, for example, a third inclined portion 26 and a fourth inclined portion 27 that are inclined in directions opposite to each other with respect to the tire axial direction. The third inclined portion 26 and the fourth inclined portion 27 of the present embodiment extend, for example, planarly, but are not limited to such a mode. The third inclined portion 26 is inclined, for example, in the same direction as the first inclined portion 23 of the first block wall 21, and extends along the first inclined portion 23 in a preferable mode. The fourth inclined portion 27 is inclined, for example, in the same direction as the second inclined portion 24 of the first block wall 21, and extends along the second inclined portion 24 in a preferable mode.

In a preferable mode, the crown sipe 30 is preferably connected to a top portion 28 formed by the third inclined portion 26 and the fourth inclined portion 27 of the second block wall 22. Accordingly, uneven wear at the end portion, at the heel side in the rotational direction R, of the crown sipe 30 can be inhibited.

Each crown block 15 preferably has, for example, a pair of block lateral walls 29 that project outward in the tire axial direction. Such a crown block 15 has high lateral stiffness and serves to further enhance steering stability.

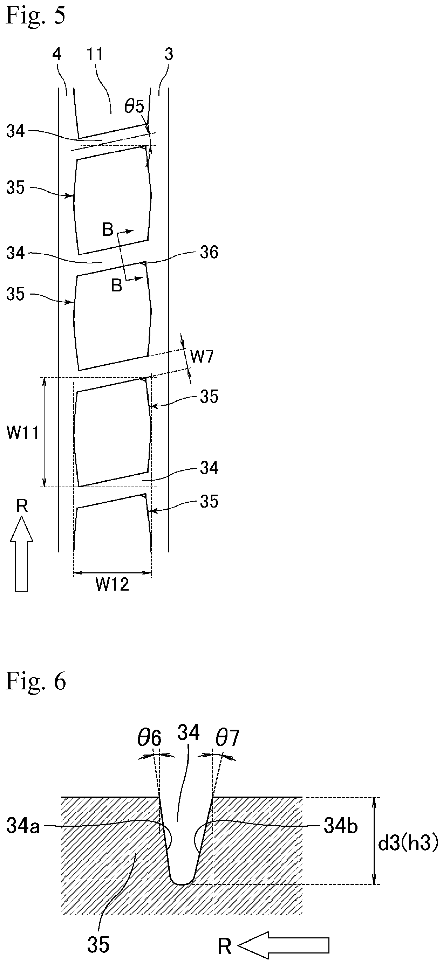

FIG. 5 shows an enlarged view of the middle land portion 11. As shown in FIG. 5, the middle land portion 11 is demarcated between the crown main groove 3 and the shoulder main groove 4. The middle land portion 11 includes a plurality of middle blocks 35 demarcated by a plurality of middle lateral grooves 34.

Each middle lateral groove 34 is, for example, preferably inclined at an angle θ5 of 10 to 20° relative to the tire axial direction. Each middle lateral groove 34 of the present embodiment is inclined at the heel side in the rotational direction R from the crown main groove 3 toward the shoulder main groove 4. Such a middle lateral groove 34 can guide water in the groove to the outer side in the tire axial direction during running on a wet road surface.

Each middle lateral groove 34 extends, for example, in a straight manner. Each middle lateral groove 34 has, for example, a groove width W7 larger than that of the crown lateral groove 14 (shown in FIG. 2). To enhance wet performance, the groove width W7 of each middle lateral groove 34 is, for example, preferably 1.15 to 1.25 times the groove width W6 of the crown lateral groove 14.

FIG. 6 shows a cross-sectional view of the middle lateral groove 34 taken along a line B-B in FIG. 5. As shown in FIG. 6, each middle lateral groove 34 includes a first groove wall 34a at the toe side in the rotational direction R, and a second groove wall 34b at the heel side in the rotational direction R. The first groove wall 34a is provided, for example, at an angle θ6 of 3 to 7° relative to the tire radial direction. The second groove wall 34b is provided, for example, at an angle θ7 larger than the angle θ6 relative to the tire radial direction. The angle θ7 is, for example, preferably 9 to 13°. Such a middle lateral groove 34 serves to inhibit heel-and-toe wear of the middle block 35.

Each middle lateral groove 34 preferably has, for example, a groove depth d3 that is 0.90 to 1.00 times that of the crown main groove 3. The groove depth d3 of each middle lateral groove 34 of the present embodiment is equal to that of the crown main groove 3. Such a middle lateral groove 34 can further enhance wet performance.

As shown in FIG. 5, each middle block 35 preferably has, for example, a substantially hexagonal tread surface. The "substantially hexagonal tread surface" means that, for example, a chamfered portion 36 obtained by slightly cutting a corner of the block is acceptable.

The area Sm of the tread surface of each middle block 35 is preferably smaller than the area Sc of the tread surface of one crown block piece 20. Specifically, the area Sm is preferably 0.80 to 0.90 times the area Sc. Such a middle block 35 wears evenly together with the crown block piece 20 and can exhibit excellent uneven wear resistance.

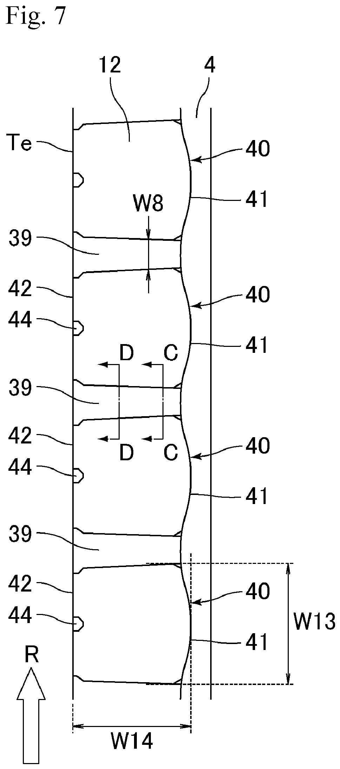

FIG. 7 shows an enlarged view of the shoulder land portion 12. As shown in FIG. 7, the shoulder land portion 12 is demarcated outward of the shoulder main groove 4 in the tire axial direction. The shoulder land portion 12 includes, for example, a plurality of shoulder blocks 40 demarcated by a plurality of shoulder lateral grooves 39.

Each shoulder lateral groove 39 preferably has, for example, a groove width W8 that gradually increases toward the outer side in the tire axial direction. Such a shoulder lateral groove 39 can smoothly guide water in the groove to the outer side in the tire axial direction during running on a wet road surface.

To further enhance the above-described effect, each shoulder lateral groove 39 preferably has, for example, a groove width larger than that of the middle lateral groove 34. More specifically, each shoulder lateral groove 39 has, over the entire range thereof, a groove width larger than that of the middle lateral groove 34.

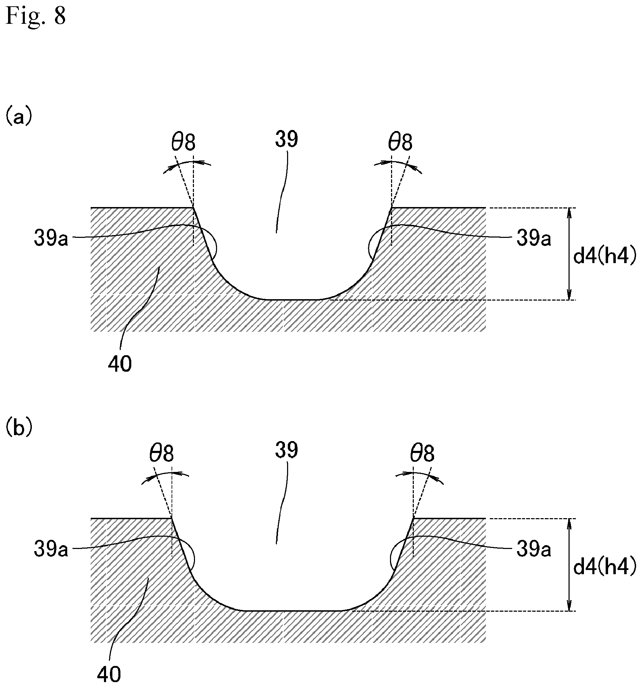

FIG. 8(a) shows a cross-sectional view of the shoulder lateral groove 39 taken along a line C-C in FIG. 7. FIG. 8(b) shows a cross-sectional view of the shoulder lateral groove 39 taken along a line D-D in FIG. 7. The cross-section along the line D-D is a cross-section at the tread edge Te side with respect to the cross-section along the line C-C. As shown in FIGS. 8(a) and (b), the shoulder lateral groove 39 preferably has, for example, a pair of groove walls 39a that are each inclined at an angle θ8 of 10 to 25° relative to the tire radial direction.

In a more preferable mode, the angle θ8 of each groove wall 39a of the shoulder lateral groove 39 relative to the tire radial direction gradually increases toward the outer side in the tire axial direction. Such a shoulder lateral groove 39 exhibits excellent drainage performance and can further enhance wet performance.

Each shoulder lateral groove 39 preferably has, for example, a groove depth d4 that is 0.20 to 0.30 times that of the shoulder main groove 4. Such a shoulder lateral groove 39 increases the stiffness of the shoulder land portion 12 and can enhance steering stability while maintaining wet performance.

As shown in FIG. 7, each shoulder block 40 includes, for example, an inner side wall 41 that is curved so as to project toward the inner side in the tire axial direction, and a planar outer side wall 42 extending along the tire circumferential direction. Accordingly, each shoulder block 40 preferably has, for example, a substantially pentagonal tread surface. The "substantially pentagonal tread surface" means that, for example, a chamfered portion 43 obtained by slightly cutting a corner of the block and a recess 44 provided on a side wall are acceptable.

The outer side wall 42 preferably has a recess 44 that is recessed to the inner side in the tire axial direction. Such an outer side wall 42 serves to exhibit excellent anti-wandering performance.

The area Ss of the tread surface of each shoulder block 40 is, for example, preferably larger than the area Sm of the tread surface of the middle block 35 (shown in FIG. 5). Specifically, the area Ss is preferably 1.05 to 1.15 times the area Sm. Accordingly, slipping of the shoulder block 40 during running with the tire is inhibited.

As shown in FIG. 1, the sum Sm + Sc of the area Sm of the tread surface of the middle block 35 and the area Sc of the tread surface of the crown block piece 20 is preferably not less than 1.5 times the area Ss of the tread surface of the shoulder block 40 and more preferably not less than 1.8 times the area Ss, and is preferably not greater than 2.5 times the area Ss and more preferably not greater than 2.2 times the area Ss. Each of such blocks inhibits slipping of the shoulder block 40, while causing a contact pressure applied to the crown block 15 to be appropriate, during running with the tire, and can exhibit excellent uneven wear resistance.

The tread portion 2 has a plurality of types of blocks (the middle blocks 35, the shoulder blocks 40) and/or block pieces (the crown block pieces 20) each having a tread surface. The sum of the length in the tire circumferential direction and the length in the tire axial direction of at least one type of the plurality of types of blocks and block pieces (at least one of each middle block 35, each shoulder block 40, and each crown block piece 20) is preferably not less than 80 mm. From the viewpoint of block chipping resistance and wear resistance, the sum is more preferably not less than 90 mm and further preferably not less than 95 mm, and is preferably not greater than 130 mm, more preferably not greater than 120 mm, and further preferably not greater than 110 mm.

The length in the tire circumferential direction and the length in the tire axial direction of each block, each block piece are a maximum longitudinal width in the tire circumferential direction and a maximum lateral width in the tire axial direction. In the case where each block is divided into block pieces by a narrow groove (sipe), the sum of the maximum longitudinal widths in the tire circumferential direction and the maximum lateral widths in the tire axial direction of the divided block pieces is the above sum of the length in the tire circumferential direction and the length in the tire axial direction. In the case where each block or block piece is in contact with a tread edge, the sum of the maximum longitudinal width in the tire circumferential direction and the maximum lateral width in the tire axial direction of the block or block piece adjacent to the tread edge is the above sum of the length in the tire circumferential direction and the length in the tire axial direction.

That is, at least one of the sum of a length W4 in the tire circumferential direction and a length W10 in the tire axial direction in the crown block piece 20 in FIG. 3, the sum of a length W11 in the tire circumferential direction and a length W12 in the tire axial direction in the middle block 35 in FIG. 5, and the sum of a length W13 in the tire circumferential direction and a length W14 in the tire axial direction in the shoulder block 40 in FIG. 7 preferably satisfies a condition of being not less than 80 mm. Two types of blocks or block pieces more preferably satisfy the condition, and three types of blocks or block pieces further preferably satisfy the condition.

From the viewpoint of block chipping resistance and wear resistance, the length in the tire circumferential direction of each block, each block piece (the maximum longitudinal widths in the tire circumferential direction of the crown block pieces 20, the middle blocks 35, the shoulder blocks 40, etc.) is preferably not less than 40 mm, more preferably not less than 45 mm, and further preferably not less than 50 mm, and is preferably not greater than 100 mm, more preferably not greater than 90 mm, and further preferably not greater than 80 mm.

From the viewpoint of block chipping resistance and wear resistance, the length in the tire axial direction of each block, each block piece (the maximum lateral widths in the tire axial direction of the crown block pieces 20, the middle blocks 35, the shoulder blocks 40, etc.) is preferably not less than 30 mm, more preferably not less than 35 mm, and further preferably not less than 40 mm, and is preferably not greater than 100 mm, more preferably not greater than 90 mm, and further preferably not greater than 80 mm.

From the viewpoint of block chipping resistance and wear resistance, the block height, block piece height h from the tread surface to the bottom surface of each block, each block piece (block heights, block piece heights of the crown block pieces 20, the middle blocks 35, the shoulder blocks 40, etc.) is preferably equal to or greater than 15 mm and less than 25 mm. The lower limit of such a height is more preferably not less than 18 mm. The upper limit of such a height is more preferably not greater than 22 mm. In the tire in FIG. 1, as shown in FIG. 4(a), FIG. 6, and FIG. 8, the height h1 of each crown block piece 20 is the depth d1 of the crown main groove 3, the height h3 of each middle block 35 is the depth d3 of the middle lateral groove 34, and the height h4 of each shoulder block 40 is the depth d4 of the shoulder lateral groove 39.

Although the tire according to the embodiment of the present invention has been described in detail above, the present invention is not limited to the above specific embodiment, and various modifications can be made to implement the present invention.

### EXAMPLES

The present invention will be specifically described by means of examples, but the present invention is not limited to these examples.

### (Production Example 1)

A particulate carbon black 2 was produced by the production method in Example 3 in Japanese Laid-Open Patent Publication (translation of PCT application) No. H8-507555.

### (Production Example 2)

A particulate carbon black 3 was produced under each set condition, using C fuel oil as fuel and creosote oil as raw material hydrocarbon, with use of a carbon black reactor in which a combustion zone with an inner diameter of 800 mm and a length of 1600 mm provided with an air introduction duct and a combustion burner, a raw material introduction zone connected from the combustion zone and composed of a narrow diameter portion with an inner diameter of 145 mm and a length of 1000 mm to which a material nozzle is connected by penetration from the periphery thereof, and a rear reaction zone with an inner diameter of 400 mm and a length of 3000 mm provided with a quenching device are sequentially joined.

Various chemicals used in examples and comparative examples are collectively described below.
NR: TSR20
SBR: SBR1502 (styrene content: 23.5% by mass) manufactured by Sumitomo Chemical Co., Ltd.
BR: BR150B (cis content: 95% by mass) manufactured by Ube Industries, Ltd.
Particulate carbon black 1: N134 (average particle diameter: 18 nm, CTAB: 130 m²/g, N₂SA: 148 m²/g, IA: 144 mg/g, CTAB/IA: 0.90, DBP: 123 cm³/100 g)
Particulate carbon black 2: Production Example 1 (average particle diameter: 16 nm, CTAB: 170 m²/g, N₂SA: 174 m²/g, IA: 163 mg/g, CTAB/IA: 1.04, DBP: 154 cm³/100 g)
Particulate carbon black 3: Production Example 2 (average particle diameter: 16 nm, CTAB: 158 m²/g, N₂SA: 170 m²/g, IA: 145 mg/g, CTAB/IA: 1.09, DBP: 138 cm³/100 g)
Carbon black 4: N220 (average particle diameter: 22 nm, CTAB: 115 m²/g, N₂SA: 115 m²/g, IA: 118 mg/g, CTAB/IA: 0.97, DBP: 113 cm³/100 g)
Wax: OZOACE 0355 manufactured by NIPPON SEIRO CO., LTD.
Antioxidant: NOCRAC 6C (N-(1,3-dimethylbutyl)-N'-phenyl-p-phenylenediamine) manufactured by Ouchi Shinko Chemical Industrial Co., Ltd.
Stearic acid: stearic acid manufactured by NOF Corporation
Zinc oxide: Zinc Oxide Type-2 manufactured by Mitsui Mining & Smelting Co., Ltd.
Sulfur: powdery sulfur manufactured by Tsurumi Chemical Industry Co., Ltd.
Vulcanization accelerator: NOCCELER NS (N-tert-butyl-2-benzothiazylsulfenamide) manufactured by Ouchi Shinko Chemical Industrial Co., Ltd.

### (Examples and Comparative Examples)

In accordance with each of the blending formulas shown in each table, the chemicals other than the sulfur and the vulcanization accelerator were kneaded under a condition of 150°C for 5 minutes by using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes by using an open roll, to obtain an unvulcanized rubber composition.

The obtained unvulcanized rubber composition was press-vulcanized at 150°C for 35 minutes to obtain a vulcanized rubber sheet.

In accordance with "Sum of length in tire circumferential direction and length in tire axial direction of crown block piece", "Length in tire circumferential direction of crown block piece", "Length in tire axial direction of crown block piece", and "Height of crown block piece" shown in each table, the obtained unvulcanized rubber composition was formed into the shape of a tread and attached together with other tire members to produce an unvulcanized tire, and the unvulcanized tire was press-vulcanized at 150°C for 20 minutes to obtain a test tire having the basic pattern in FIG. 1 (size: 225/70R19.5 (for a heavy-duty vehicle)).

The obtained test tires and vulcanized rubber sheets were evaluated as described below. The results are shown in each table. A reference comparative example in each table is Comparative Example 1-1 in Table 1 and Comparative Example 2-1 in Table 2.

### <Rubber Hardness (Hs)>

The hardness of a vulcanized rubber sheet was measured with a type A durometer according to "Rubber, vulcanized or thermoplastic - Determination of hardness - Part 3: Durometer method" in JIS K6253-3 (2012) (JIS-A hardness). The measurement was conducted at 25°C.

### <Tensile Test>

Based on JIS K6251 (2010), a No. 7 dumbbell type test piece was produced from each of the obtained vulcanized rubber sheets, and a tensile test was carried out at 23°C using the test piece to measure an elongation at break (EB).

### <Block Chipping Resistance>

A test tire was mounted to a drive shaft, caused to run on a rough uphill road, and intentionally raced, and "number of chips × depth" of the blocks was indexed on the basis of a tire mounted to a control shaft. The results are shown as indexes with the result of the corresponding reference comparative example being regarded as 100. The higher the index is, the better the block chipping resistance is.

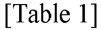

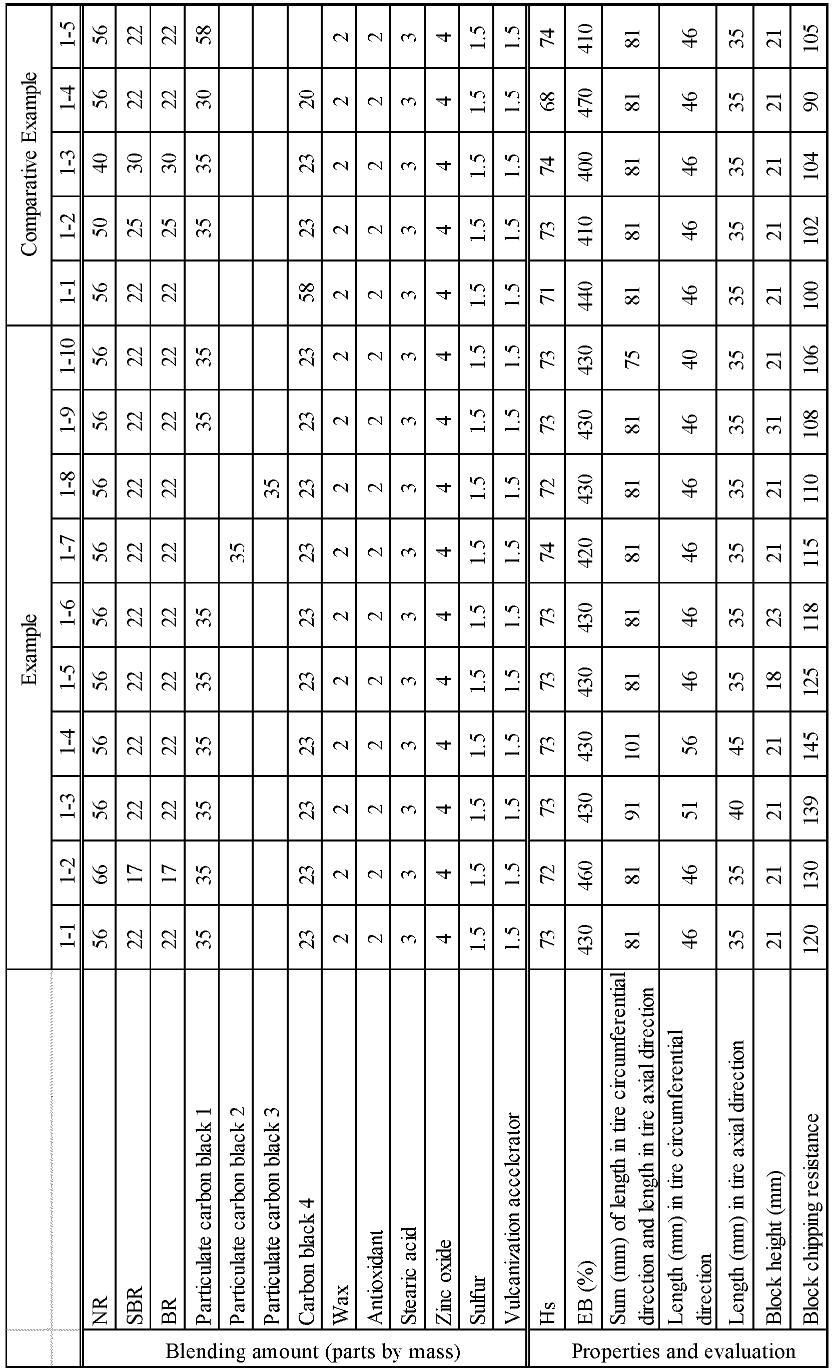

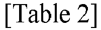

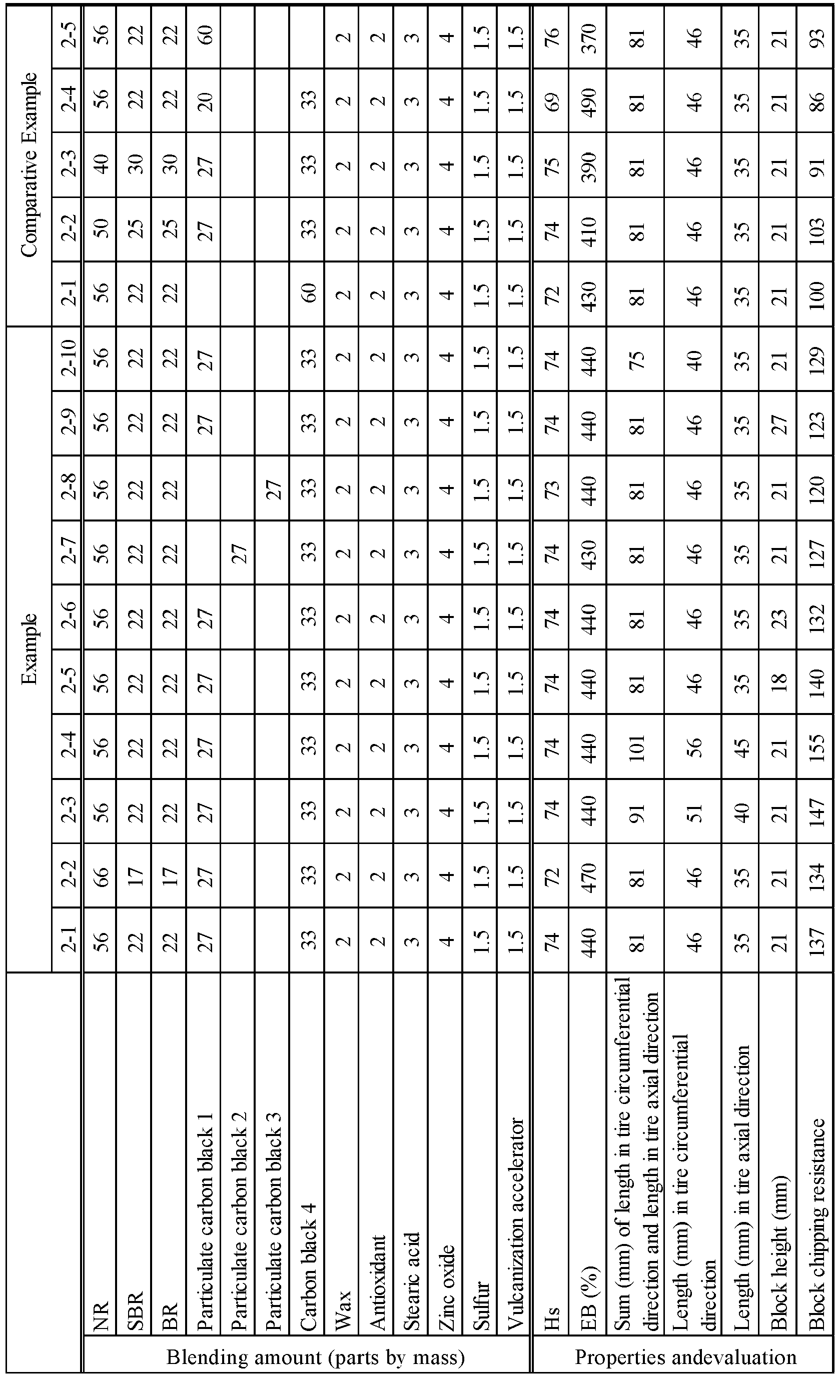

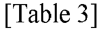

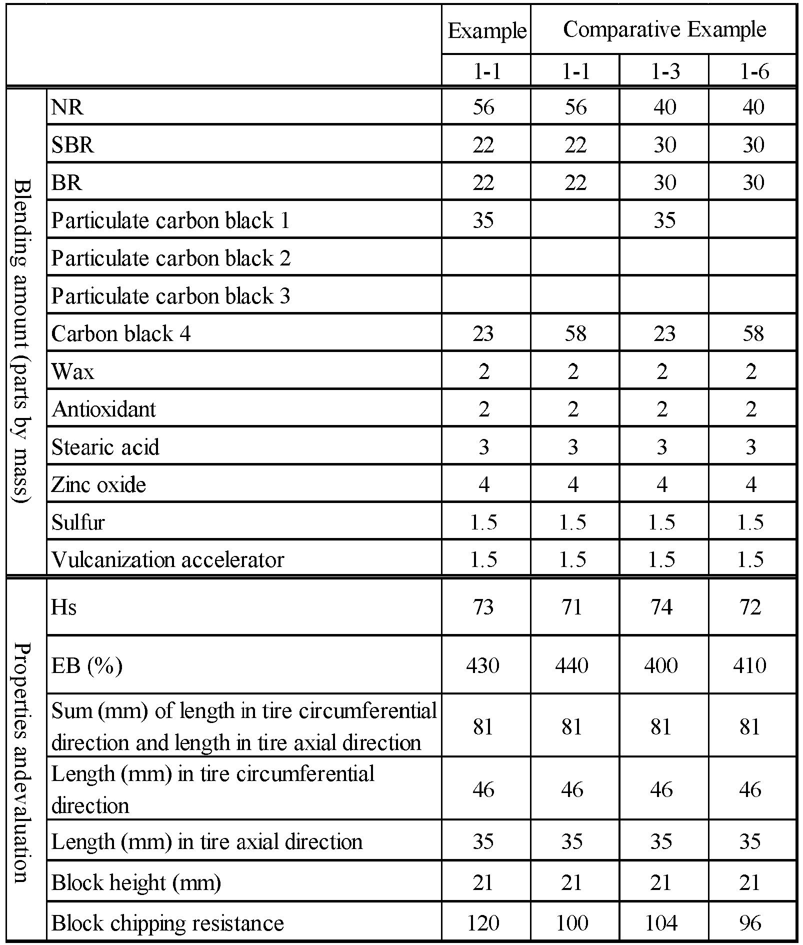

As seen from each table, the tire of each Example containing an isoprene-based rubber, a BR, an SBR, and a specific carbon black in predetermined blending amounts and having Hs and EB equal to or greater than predetermined values had good block chipping resistance. In particular, when the sum of the length in the tire circumferential direction and the length in the tire axial direction of each block (block piece) was not less than 80 mm, or when the block height (block piece height) was equal to or greater than 15 mm and less than 25 mm, the block chipping resistance was significantly excellent. In addition, by using a predetermined rubber component and a specific carbon black in combination, the block chipping resistance was synergistically improved.

Meanwhile, in Comparative Example 1-1 in which N220 grade carbon black was used, the Hs was decreased and the stiffness of each block was decreased, so that block chipping occurred. In Comparative Examples 1-2 and 1-3 in which the NR amount was small, the EB was decreased, so that block chipping occurred. In Comparative Example 1-4 in which the total carbon black amount was small, the Hs was decreased and the stiffness of each block was decreased, so that block chipping occurred. In Comparative Example 1-5 in which the blending ratio of the particulate carbon black was high, the EB was decreased, so that block chipping occurred.

The tire of each Example also had excellent wear resistance. Furthermore, even when the middle blocks and the shoulder blocks were evaluated instead of the crown block pieces, the tire of each Example similarly had excellent block chipping resistance and wear resistance.

## Claims

1. A tire (1) comprising a tread portion (2) formed from a tread rubber composition, wherein
the tread portion (2) has a plurality of types of blocks (35, 40) or block pieces (20), and
a sum of a length in a tire circumferential direction and a length in a tire axial direction of at least one type of the plurality of types of blocks (35, 40) and the block pieces (20) is not less than 80 mm, and
wherein the tread rubber composition contains a rubber component including an isoprene-based rubber, a butadiene rubber, and a styrene-butadiene rubber, and a carbon black having an average particle diameter not greater than 20 nm and/or a cetyltrimethylammonium bromide adsorption specific surface area not less than 130 m²/g, wherein
an amount of the isoprene-based rubber in 100% by mass of the rubber component is not less than 56% by mass, and
the rubber composition satisfies hardness (Hs) ≥ 72 and elongation at break (EB) ≥ 420%,
wherein the hardness is measured at 25°C with a type A durometer according to "Rubber, vulcanized or thermoplastic - Determination of hardness - Part 3: Durometer method" in JIS K6253-3 (2012), and
wherein the elongation at break is measured by carrying out a tensile test at 23°C based on JIS K6251 (2010) using a No. 7 dumbbell type test piece as a test piece.

2. The tire (1) according to claim 1, wherein a height (h3, h4) of each block (35, 40) or a height (h1) of each block piece (20) is equal to or greater than 15 mm and less than 25 mm.

3. The tire (1) according to claim 1 or 2, wherein the tire (1) is a heavy-duty pneumatic tire.

## Patentansprüche

1. Reifen (1), umfassend einen Laufflächenabschnitt (2), der aus einer Laufflächenkautschukzusammensetzung gebildet ist, wobei
der Laufflächenabschnitt (2) eine Vielzahl von Arten von Blöcken (35, 40) oder Blockstücken (20) aufweist, und
eine Summe einer Länge in einer Reifenumfangsrichtung und einer Länge in einer Reifenaxialrichtung von mindestens einer Art der Vielzahl von Arten von Blöcken (35, 40) und der Blockstücke (20) nicht weniger als 80 mm beträgt, und
wobei die Laufflächenkautschukzusammensetzung eine Kautschuckomponente, die einen Kautschuk auf Isoprenbasis, einen Butadienkautschuk und einen Styrol-Butadienkautschuk umfasst, und einen Ruß mit einem durchschnittlichen Teilchendurchmesser von nicht mehr als 20 nm und/oder einer spezifischen Cetyltrimethylammoniumbromid-Adsorptionsoberfläche von nicht weniger als 130 m²/g enthält, wobei
eine Menge des Kautschuks auf Isoprenbasis in 100 Masse-% der Kautschukkomponente nicht weniger als 56 Masse-% beträgt, und
die Kautschukzusammensetzung eine Härte (Hs) ≥ 72 und eine Bruchdehnung (EB) ≥ 420 % erfüllt,
wobei die Härte bei 25 °C mit einem Durometer vom Typ A gemäß "Rubber, vulcanized or thermoplastic - Determination of Hardness - Part 3: Durometer method" in JIS K6253-3 (2012) gemessen ist, und
wobei die Bruchdehnung durch Durchführen eines Zugversuchs bei 23 °C basierend auf JIS K6251 (2010) unter Verwendung eines Teststücks vom Hanteltyp Nr. 7 als Teststück gemessen ist.

2. Reifen (1) nach Anspruch 1, wobei eine Höhe (h3, h4) jedes Blocks (35, 40) oder eine Höhe (h1) jedes Blockstücks (20) gleich oder größer als 15 mm und kleiner als 25 mm ist.

3. Reifen (1) nach Anspruch 1 oder 2, wobei der Reifen (1) ein Schwerlastluftreifen ist.

## Revendications

1. Pneumatique (1) comprenant une portion formant bande de roulement (2) formée à partir d'une composition de caoutchouc de bande de roulement, dans lequel
la portion formant bande de roulement (2) a une pluralité de types de blocs (35, 40) ou éléments de blocs (20), et
une somme d'une longueur dans une direction circonférentielle du pneumatique et d'une longueur dans une direction axiale du pneumatique d'au moins un type de la pluralité de types de blocs (35, 40) et des éléments de blocs (20) n'est pas inférieure à 80 mm, et
dans lequel la composition de caoutchouc de bande de roulement contient un composant de caoutchouc incluant un caoutchouc à base d'isoprène, un caoutchouc butadiène, et un caoutchouc styrène butadiène, et un noir de carbone ayant un diamètre particulaire moyen qui n'est pas supérieur à 20 nm et/ou une superficie spécifique d'absorption de bromure de cétyltriméthylammonium qui n'est pas inférieure à 130m²/g, dans lequel
une quantité du caoutchouc à base d'isoprène dans 100 % en masse du composant de caoutchouc n'est pas inférieure à 56 % en masse, et
la composition de caoutchouc satisfait à : dureté (Hs) ≥ 72 et allongement à la rupture (EB) ≥ 420 %,
dans lequel la dureté est mesurée à 25 °C avec un duromètre de type A selon la norme industrielle japonaise JIS K6253-3 (2012) « Rubber, vulcanized or thermoplastic - Determination of hardness - Part3 : Durometer method » (Caoutchouc, vulcanisé ou thermoplastique - Détermination de la dureté - Partie 3 : Méthode au duromètre), et
dans lequel l'allongement à la rupture est mesuré en effectuant un essai de traction à 23 °C sur la base de JIS K6251 (2010) en utilisant une pièce d'essai de type haltère N° 7 comme pièce d'essai.

2. Pneumatique (1) selon la revendication 1, dans lequel une hauteur (h3, h4) chaque bloc (35, 40) ou une hauteur (h1) de chaque pièce de bloc (20) est égale ou supérieure à 15 mm et est inférieure à 25 mm.

3. Pneumatique (1) selon la revendication 1 ou 2, dans lequel le pneumatique (1) est un bandage pneumatique pour service intensif.
